# EUROPEAN PATENT APPLICATION

(11) **EP 1 254 765 A1**
(43) Date of publication of application: **06.11.2002**
(21) Application number: 02252880.6
(22) Date of filing: 24.04.2002
(51) Int. Cl.: B32B 27/06, B42D 15/00, B42D 15/10, G07D 7/00, B41M 3/14

(54) **Improvements in substrates for security threads**

(30) Priority: 30.04.2001 GB 0110544
(71) Applicant: De La Rue International Limited, Basingstoke, Hampshire RG22 4BS (GB)
(72) Inventor: Ridyard, Stephen David, Bolton, Lancashire BL2 1EX (GB); Lomax, Peter Roy, Bolton BL6 7NJ (GB)
(74) Representative: Bucks, Teresa Anne

(57) **Abstract**

The invention relates to improvements in substrates and in particularly in new substrates having security features which provide security against imitation. A security substrate comprises at least two light transmitting support layers, each having indicia formed by a plurality of opaque regions provided on one surface thereof. The support layers are laminated together with the opaque regions located inside the substrate and separated by at least one layer of an opaque magnetic or non-metallic material of contrasting colour to the opaque regions such that in reflected light the indicia are visible. In transmitted light the indicia are not visible.

## Description

The invention relates to improvements in substrates and in particularly in new substrates having security features which provide security against imitation.

It is widely known to use in banknotes and other security documents security elements such as security threads (or strips). These threads are partially or wholly embedded in a paper or plastic substrate, and generally provide different viewing conditions depending on whether the security document is viewed in transmitted or reflected light.

EP-A-0319157, for example, describes a security element made from a transparent plastic film provided with a continuous reflective metal layer, such as aluminium, which has been vacuumed deposited on the film. The metal layer is partially demetallised to provide clear demetallised regions which form indicia. When wholly embedded within a paper substrate the security element is barely visible in reflected light. However when viewed in transmitted light the indicia can be clearly seen highlighted against the dark background of the metallised area of the thread and adjacent areas of the paper. Such threads can also be used in a security document provided with repeating windows in at least one surface of the paper substrate at which the security thread is exposed. A security document of this type, when viewed in transmitted light, will be seen as a dark line with the indicia highlighted. When viewed in reflective light on the windowed side, the bright shiny aluminium portions are readily visible in the windows.

Whilst this type of security thread is highly advantageous in applications such as banknotes and other security documents, there is a need for a security elements for other security applications which provide visible indicia in reflective light, but not in transmitted light. An example of one such security element is described in EP-A-0400902. This describes a security strip having a number of layers including at least one continuous metallic layer and one partially demetallised layer, in which the metals used in the continuous and demetallised layers are of a different colour. When viewed in reflective light the metallic colour of the continuous layer can be seen in the demetallised regions contrasting with the colour of the remaining metal portions on the demetallised layer. When viewed in transmitted light, the security element will be seen as a continuous dark line.

It is an object of the present invention to provide an improved security substrate, which can be slit to form elongate security threads and the like, having indicia which can be seen in reflective light, but which are not visible in transmitted light.

According to the invention there is therefore provided a security substrate comprising at least two light transmitting support layers, each having indicia formed by a plurality of opaque regions provided on one surface thereof, the support layers being laminated together with the opaque regions located inside the substrate and separated by at least one layer of an opaque magnetic material of contrasting colour to the opaque regions such that in reflected light the indicia are visible, whereas the indicia are not visible in transmitted light.

The invention also provides A security substrate comprising at least two light transmitting support layers, each having a plurality of opaque regions provided on one surface thereof, providing indicia, the support layers being laminated together with the opaque regions located inside the substrate separated by at least one layer of an opaque non-metallic material of contrasting colour to the opaque regions such that in reflected light the indicia are visible to the unaided eye but are not distinguishable in transmitted light.

A preferred embodiment of the present invention will now be described, by way of example only, in which:-
Fig. 1 is a plan view of a section of a security thread cut from a substrate according to the present invention; and
Fig. 2 is a cross sectional side elevation of the security thread of Fig. 1 taken on the line II-II.

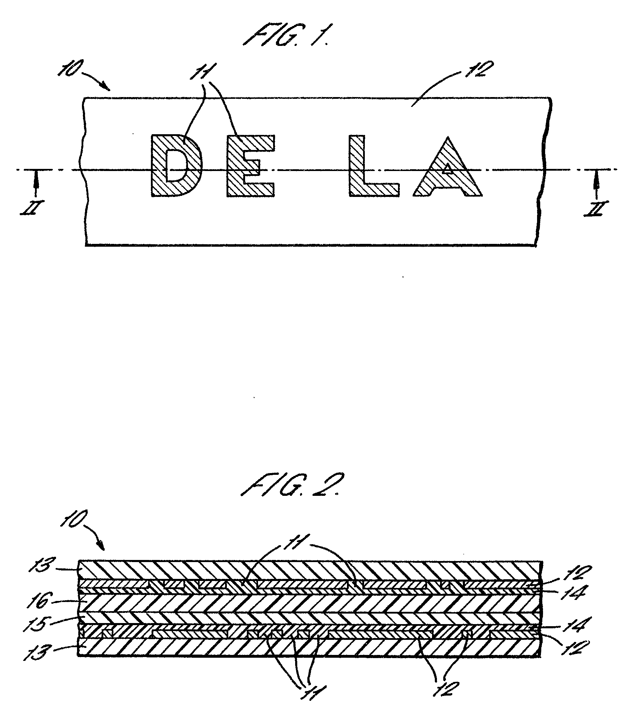

Fig. 1 shows an elongate security thread 10 which has been formed by slitting a sheet of a security substrate according to the present invention.

The structure of the substrate used in forming the thread 10 is shown in Fig. 2. The substrate comprises at least two layers of polyethylene terephthalate (polyester) 13, one on either side of the substrate. The inner surfaces of each of the polyester layers 13 are partially metallised to provide the metallic regions 12 with clear regions there between forming indicia 11. The metallic regions 12 may be formed by the application of a metallic ink to the layers 13. Alternatively the metallic regions 12 may be provided using a known demetallisation process to create the gaps forming the indicia 11 in a continuous metal layer that has been vacuum deposited on the polyester layers 13. Suitable materials for the polyester layers 13 may be a pretensiled film (from Mitsubishi) or a metallised Type S film (from DuPont), of say 12 microns.

The indicia 11 may comprise small or large letters, numbers, characters, patterns or indicia 11 of any other form. The indicia 11 may comprise a mixture of two or more forms and may also incorporate different sizes e.g. small and large characters. The metallic regions 12 need not be the same on both sides of the substrate. They can be formed to provide different sets of indicia on either side of the substrate to give the substrate a different visual appearance from each side. The indicia may be provided as text, alphanumerics, bar codes, logos or patterns such as are described in EP-A-0972111. For example the name of a manufacturer may be provided on one side and a bar code on the other.

The metallic regions 12 are protected by a layer 14, which may be PPT 1001 (from Sun Chemical) or another similar type of material. The two metallised polyester layers 13 are laminated together using a layer of a suitable adhesive 15, for example NM36 (from Elf Atochem) or N2525/3164 (Holden Adhesives) with at least one opaque layer 16 therebetween, which may be continuous.

The opaque layer 16 can either be a non-metallic and therefore non-reflective, layer having a colour which contrasts in reflected light with the metal of the metallic regions 12, but not transmitted light, with the colour of the metallic regions 12.

When viewed in transmitted light, it is not possible to distinguish the indicia 11 from the surrounding metallic regions 12 and the thread 10 appears as a continuous dark line. When viewed in reflected light opaque indicia 11 can be seen in contrast to surrounding shiny metallic regions 12.

The metallic regions 12 on each layer 13 may be of a different coloured metal, in which case two opaque layers 16 would be used, each contrasting with one of the metals.

The opaque layer 16 could be provided by a magnetic ink. This can either be a magnetic ink having a high coercivity, which tends to be black or dark brown such as ZA80032 W (from Sicpa), or one having a soft coercivity, being of a paler colour, such as FX1021 (from Ferron). Magnetic inks advantageously provide machine readability in addition to the visual indicia 11 in reflected light. The magnetic ink is preferably applied with a coat weight of between 3 and 12 gsm.

Such magnetic inks may also be applied in a coded manner. Examples of such methods of applying codes are described in EP-A-407550 and GB-A-2312595, although other codes may be used. Combinations of soft and hard magnetic inks could also be used.

The coding may either be permanent or rewriteable. Printing in several different magnetic materials, in sequence or magnetic writing, as in credit cards, may be used to create the codes.

Fluorescent, phosphorescent and phosphor up converters and taggants may also be used to provide additional security features, and a variety of appearances under certain conditions eg fluorescence, luminescence, phosphorescence etc. They may be included either in the opaque layer 16, or coated on top of the opaque layer 16. In the case of fluorescent, phosphorescent and up converters, these may be provided on one side of the opaque layer 16 only, in which case they are only viewable from one side. Alternatively they may be coated on both sides of the opaque layer 16. As a further alternative a different fluorescent, phosphorescent and/or up converter material or a combination of two of these materials may coated on either side of the opaque layer 16. Suitable materials are described in GB-A-2258659 and GB-A-2089385. The concentration of the material selected is very much dependant on the strength of response required and therefore the application in which the substrate is to be used.

A suitable taggant for use in the substrate would be Micro Tag^{(™)} (from Micro Tag Temed Ltd).

The metallic regions 12 may be replaced by regions formed by non-metallic opaque coloured inks.

It is also possible to create a suitable effect using colour shift threads such as those supplied by Agra Vadeko, polymers or polymer liquid crystal inks. Conducting polymers, thermochromics and photochromics can also be used to good effect. For example the thermochromics and photochromics could be provided as an additional coating to either one or both sides of the opaque layer 16 to provide colour changes under certain conditions such as change of viewing angle or temparature applied to the substrate. As an alternative, a thermochromic coating may be applied to one side of the opaque layer 16 and a photochromic coating to the other side. A suitable photochromic material is 0.05% Reversacol Oxford Blue (from James Robinson) in 4:1 Seristar SX varnish/ZC50 thinner (from Sericol). A suitable thermochromic ink would be ZA50020 (from Sicpa).

The different materials proposed above can be used individually or in combination to provide a preferred set of appearances under particular viewing/handling conditions.

The conducting polymer may be provided either as a separate coating or in place of one or both of the polyester layers 13.

The polyester layers 12 may be embossed with a suitable diffraction grating to produce holographic effects. This would require the inclusion of a layer of an embossing lacquer, between the partially metallised region 12 and the metal-protection layer 14, which would then be embossed using a holographic shim.

The substrate formed according to the structure described above can conveniently be slit to form elongate threads 10, as shown in Fig. 1. These threads 10, or other larger portions of the substrate, can be conveniently woven into textile garments, so as to be partially embedded. They may also be partially embedded into security documents or other articles made of paper, card or other fibrous materials or polymers. Suitable articles include labels, hang tags and packaging. The substrate provides a visual means of checking for authenticity wherein the indicia are visible in reflected light (where exposed at the surface of the article in which it is incorporated) due to the contrast in the coloured opaque layer and the surrounding metallic regions. In the magnetic version, the thread also provides a non-visual machine detectable means of additionally checking the authenticity.

## Claims

1. A security substrate comprising at least two light transmitting support layers (13), each having indicia (11) formed by a plurality of opaque regions (12) provided on one surface thereof, the support layers being laminated together with the opaque regions (12) located inside the substrate and separated by at least one layer of an opaque magnetic material of contrasting colour to the opaque regions (12) such that in reflected light the indicia (11) are visible, whereas in transmitted light the indicia (11) are not visible.

2. A security substrate comprising at least two light transmitting support layers (13), each having a plurality of opaque regions (12) provided on one surface thereof, providing indicia (11), the support layers (13) being laminated together with the opaque regions (12) located inside the substrate separated by at least one layer of an opaque non-metallic material (16) of contrasting colour to the opaque regions (12) such that in reflected light the indicia (11) are visible to the unaided eye but are not distinguishable in transmitted light.

3. A security substrate as claimed in claim 1 or claim 2 in which the opaque regions (12) are metallic regions.

4. A security substrate as claimed in claim 3 in which the metallic regions (12) are provided by partially demetallisation of metallic layers provided on the support layers (13).

5. A security substrate as claimed in claim 3 in which the metallic regions (12) are provided by partially metallising the support layers (13).

6. A security substrate as claimed in any one of claims 3 to 5 in which the metallic regions (12) are provided by one or more metallic inks.

7. A security substrate as claimed in any one of claims 3 to 6 in which a metal protecting layer (14) covers the metallic regions (12).

8. A security substrate as claimed in claim 1 or claim 2 in which the opaque regions (12) are non-metallic regions.

9. A security substrate as claimed in claim 8 in which the non-metallic regions (12) are provided by one or more coloured inks.

10. A security substrate as claimed in any one of the preceding claims in which the indicia (11) provided on one support layer (13) differ from those on the other layer (13).

11. A security substrate as claimed in any one of claims 1 to 9 in which the indicia (11) provided on each support layer (13) are the same.

12. A security substrate as claimed in any one of the preceding claims in which the opaque layer (16) is provided by at least one magnetic ink.

13. A security substrate as claimed in claim 12 in which the opaque layer (16) is provided by a plurality of magnetic inks.

14. A security substrate as claimed in any one of the preceding claims in which the opaque layer (16) is magnetic and encodeable.

15. A security substrate as claimed in any one of the preceding claims in which the colour of the opaque layer (16) is visibly darker than the colour of the opaque regions (12).

16. A security substrate as claimed in any one of the preceding claims in which the opaque layer (16) is brown or black.

17. A security substrate as claimed in any one of the preceding claims in which one or more of a fluorescent, phosphorescent, up converter and/or taggant material is incorporated in the continuous opaque layer (16).

18. A security substrate as claimed in any one of the preceding claims in which one or more of a fluorescent, phosphorescent, UV converter and/or taggant material is provided in a coating on one or both sides of the opaque layer (16).

19. A security substrate as claimed in any one of the preceding claims in which one or more of a thermochromic or photochromic material is provided in a coating on one or both sides of the opaque layer (16).

20. A security substrate as claimed in any one of claims 3 to 19 in which the metallic regions (12) are provided with holographic embossings.

21. A security thread (10) made from a security substrate as claimed in any one of the preceding claims by slitting.

22. An article in which the security thread (10) as claimed in claim 21 or a section of the substrate as claimed in any one of claims 1 to 20 is at least partially embedded.

23. An article as claimed in claim 22 in which the article is made from paper, card or textile material.

24. An article as claimed in claim 22 in which the article is a security document.

25. An article as claimed in claim 22 in which the article is a garment.
